# EUROPÄISCHE PATENTANMELDUNG

(11) **EP 1 099 902 A1**
(43) Veröffentlichungstag der Anmeldung: **16.05.2001**
(21) Anmeldenummer: 00122125.8
(22) Anmeldetag: 12.10.2000
(51) Int. Cl.: F21V 8/00

(54) **Beleuchtungseinheit**

(30) Priorität: 13.11.1999 DE 19954794
(71) Anmelder: ROBERT BOSCH GMBH, 70442 Stuttgart (DE)
(72) Erfinder: Flohr, Heinrich, 31137 Hildesheim (DE); Vogt, Siegfried, 31139 Hildesheim (DE)

(57) **Zusammenfassung**

Es wird eine Beleuchtungseinheit vorgeschlagen, die ein Lichtleiterelement (2) mit einer länglichen, gekrümmt verlaufenden Leuchtfläche (6) und wenigstens eine Lichtquelle (4) zur Ausleuchtung des Lichtleiterelements (2) umfasst, wobei erfindungsgemäß das Lichtleiterelement (2) eine Einkoppelstelle (3) für die wenigstens eine Lichtquelle (4) aufweist, durch welche ein wesentlicher Teil des Lichts im Wesentlichen parallel zur Leuchtfläche (6) eingestrahlt wird, dass das Lichtleiterelement so ausgebildet ist, dass das eingestrahlte Licht zumindest teilweise entlang der gekrümmten Leuchtfläche (6) weiter reflektiert wird und dass Reflexionsmittel vorgesehen sind, die einen festlegbaren Teil des ansonsten weiter reflektierten Lichts zur Leuchtfläche (6) auskoppeln.

## Beschreibung

Die Erfindung betrifft eine Beleuchtungseinheit, die ein Lichtleiterelement mit einer länglichen, gekrümmt verlaufenden Leuchtfläche und wenigstens eine Lichtquelle zur Ausleuchtung des Lichtleiterelements umfasst.

### Stand der Technik

Beleuchtungseinheiten der einleitend bezeichneten Art sind beispielsweise unter dem Begriff "Corona-Lichtleiter" bekannt geworden. Derartige Beleuchtungseinheiten dienen beispielsweise zur Erzeugung einer "Corona" um einen Druckknopf als Suchbeleuchtung.

Zur Herstellung eines Corona-Lichtleiters wird regelmäßig ein kreisringförmiger Plexiglaskörper eingesetzt, dessen kreisringförmige Leuchtfläche durch z. B. mehrere Leuchtdioden oder Glühbirnen beleuchtet wird, die an der der Leuchtfläche gegenüberliegenden kreisringförmigen Oberflächenseite des Plexiglaskörpers angeordnet sind.

Mehrere Lichtquellen auf dem Kreisring verteilt sind notwendig, um eine gleichmäßige Ausleuchtung der Leuchtfläche zu erreichen.

Selbst ein Lichtleiter in Form eines Kreishalbringes lässt sich bei entsprechend großem Radius des Lichtleiters nicht mit lediglich einer Lichtquelle homogen beleuchten.

Durch mehrere Lichtquellen erhöhen sich jedoch nicht nur die Herstellungskosten, sondern auch die Wartungskosten, da die Wahrscheinlichkeit eines Ausfalls einer Lichtquelle erhöht ist.

### Aufgabe und Vorteile der Erfindung

Der Erfindung liegt die Aufgabe zu Grunde, eine Beleuchtungseinheit der einleitend bezeichneten Art bereitzustellen, die eine homogene Leuchtwirkung zeigt und sich vergleichsweise kostengünstiger herstellen lässt sowie einen geringeren Wartungsaufwand erfordert.

Diese Aufgabe wird durch die Merkmale des Anspruchs 1 gelöst.

In den Unteransprüchen sind vorteilhafte und zweckmäßige Weiterbildungen der Erfindung angegeben.

Die Erfindung geht von einer Beleuchtungseinheit aus, die ein Lichtleiterelement mit einer länglichen, gekrümmt verlaufenden Leuchtfläche und wenigstens eine Lichtquelle zur Ausleuchtung des Lichtleiterelements umfasst. Der Kern der Erfindung liegt nun darin, dass das Lichtleiterelement eine Einkoppelstelle für die wenigstens eine Lichtquelle aufweist, durch welche ein wesentlicher Teil des Lichts ungefähr parallel zur Leuchtfläche eingestrahlt wird, dass das Lichtleiterelement so ausgebildet ist, dass das eingestrahlte Licht zumindest teilweise entlang der gekrümmten Leuchtfläche mittels Totalreflexion weiter reflektiert wird, und dass Reflexionsmittel vorgesehen sind, die einen festlegbaren Teil des ansonsten weiter reflektierten Lichts zur Leuchtfläche auskoppeln. Auf diese Weise ist es möglich, mit nur einer Lichtquelle eine gekrümmt verlaufende Leuchtfläche beispielsweise eine kreisringförmige Leuchtfläche, homogen auszuleuchten. Dabei kann auf elegante Art der Effekt ausgenutzt werden, dass auch bei seitlich an der Leuchtfläche angeordneten gekrümmten Wandungen, die einen nicht zu kleinen Krümmungsradius aufweisen, ein Großteil von tangential eingekoppeltem Licht auf Grund der Gesetze der Totalreflexion weiter reflektiert wird, sofern die Seitenwand eine entsprechende Oberflächenbeschaffenheit aufweist.

Für den Einsatz der erfindungsgemäßen Beleuchtungseinheit, insbesondere als Suchbeleuchtung für Druckknöpfe wird des Weiteren vorgeschlagen, dass das Lichtleiterelement und die Leuchtfläche ringförmig, vorzugsweise kreisringförmig ausgebildet sind. Für bestimmte Anwendungsfälle kann das Lichtleiterelement auch die Form eines unvollständigen Ringes z. B. die eines Halbringes aufweisen.

Um eine möglichst gleichmäßige Ausleuchtung der Leuchtfläche zu erreichen, wird im Weiteren vorgeschlagen, dass die Leuchtfläche eine das Licht diffus streuende Struktur aufweist. Das heißt an der Leuchtfläche ankommendes nicht reflektiertes Licht soll vorzugsweise wie bei einer Mattscheibe diffus gestreut werden.

In einer weiteren besonders bevorzugten Ausgestaltung der Erfindung sind im Bereich der Leuchtfläche und/oder einer der Leuchtfläche gegenüberliegenden Oberfläche des Lichtleiterelemets Diffusionspartikel vorgesehen, die einen zum Lichtleitermaterial unterschiedlichen Brechungsindex aufweisen. Dies stellt eine Möglichkeit dar, um gezielt entlang der Leuchtfläche geleitetes Licht durch die Leuchtfläche nach einer entsprechenden Reflexion auszukoppeln. Alternativ oder zusätzlich ist es auch denkbar, dass entsprechende Streuzentren zum Auskoppeln von im Lichtleiterelement geführtem Licht in Form von z. B. Diffusionspartikel erfolgt, die im Volumen des Lichtleitermaterials verteilt angeordnet sind.

In einer weiteren besonders bevorzugten Ausgestaltung der Erfindung wird die Leuchtfläche oder eine der Leuchtfläche gegenüberliegende Oberfläche am Lichtleiter so ausgestaltet, dass sie von der Einkoppelstelle der Lichtquelle entweder wendelförmig abfällt oder wendelförmig ansteigt. Durch diese Maßnahme wird eine Art Keilstruktur geschaffen, an welcher das Licht gezielt durch eine Totalreflexion weitergeführt werden kann, jedoch auch durch eine entsprechende Oberflächenbeschaffenheit der keilförmig verlaufenden Oberfläche eine Auskopplung eines bestimmten Anteils des weitergeleiteten Lichtes durch die Leuchtfläche möglich wird. Z. B. weist die wendelförmig verlaufende Oberfläche eine Riffelung auf, die einen ganz bestimmten Anteil des Lichtes unter einem großen Winkel, vorzugsweise im Bereich 90 Grad auf die Leuchtfläche reflektiert. Ein ähnlicher Effekt kann auch dadurch erzielt werden, dass die wendelförmig verlaufende Oberfläche eine definiert vorgegebene Oberflächenrauigkeit besitzt.

In einer außerdem bevorzugten Ausgestaltung der Erfindung weist eine seitlich und/oder eine gegenüberliegend zur Leuchtfläche angeordnete Oberfläche Reflektoreigenschaften auf. Durch diese Maßnahme kann erreicht werden, dass Licht, welches das Lichtleiterelement nicht durch die Leuchtfläche verlässt, wieder in das Lichtleiterelement zurückreflektiert wird. Dies kann beispielsweise dadurch erreicht werden, dass bei einem Lichtleiterelement seitlich angeordnete Wandabschnitte, z. B. die innere und äußere Ringwand eines ringförmigen Lichtleiterelements verspiegelt sind. Zusätzlich kann auch die der Leuchtfläche gegenüberliegende Fläche verspiegelt werden. Des Weiteren besteht die Möglichkeit das Lichtleiterelement zumindest an einer Seitenfläche, bei einer ringförmigen Ausführung beispielsweise an der äußeren Ringwand mit einem separaten Reflektor zu versehen.

### Zeichnungen

Ein Ausführungsbeispiel der Erfindung ist in den Zeichnungen dargestellt und unter Angabe weiterer Einzelheiten und Vorteile näher erläutert. Es zeigen
- Fig. 1: eine erfindungsgemäße Beleuchtungseinheit in einer schematischen teilweise geschnittenen Seitenansicht und
- Fig. 2: die Beleuchtungseinheit gemäß Figur 1 in einer schematischen Draufsicht.

### Beschreibung des Ausführungsbeispiels

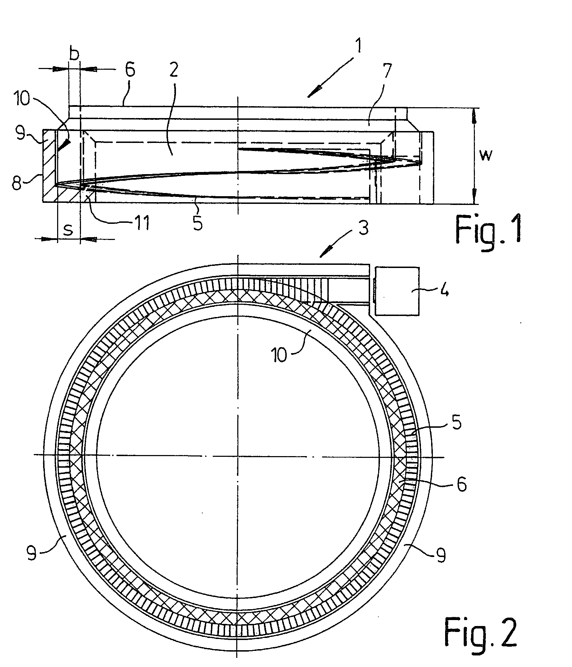

In Figur 1 und 2 ist eine Beleuchtungseinheit 1 dargestellt, die ein Lichtleiterelement 2 mit einer Einkoppelstelle 3 für eine Lichtquelle 4, z. B. eine Leuchtdiode, eine Glühlampe oder dergleichen, umfasst. Das kreisringförmige Lichtleiterelement 2 und die Einkoppelstelle 3 bilden eine zyklonartige Struktur (siehe Figur 2). Auf diese Weise kann das von der Lichtquelle 4 ausgestrahlte Licht möglichst verlustfrei in die ansonsten kreisringförmige Struktur des Lichtleiterelements 2 eingekoppelt werden.

Die in Draufsicht kreisringförmige Unterseite des Lichtleiterelements 2 steigt von der Einkoppelstelle 3 gemäß der in Figur 1 gestrichelt eingezeichneten Linien über den Umfang betrachtet gleichmäßig wendelförmig an. Das heißt bei einer Abwicklung der Wendel entstünde ein Element mit vorzugsweise linearer Steigung. Die Oberfläche der wendelförmig ansteigenden Unterseite 5 weist eine z. B., wie in Figur 2 schematisch dargestellt, radial verlaufende Riffelung auf, die dazu führt, dass von der Lichtquelle 4 eingekoppeltes Licht teilweise zu einer darüber liegenden konzentrisch angeordneten ringförmigen Leuchtfläche 6 reflektiert wird, während das Licht den Lichtleiterring 2 durchläuft.

Die Leuchtfläche 6, durch welche das Licht ausgekoppelt wird, weist vorzugsweise eine das Licht ungleichmäßig streuende Oberfläche auf, so dass ein Mattscheibeneffekt erzielt werden kann. Auf diese Weise ist lediglich ein homogenes Leuchten der Leuchtfläche zu sehen, ohne dass für den Betrachter optische Abbildungen innerhalb des Lichtleiters sichtbar werden. Der wendelförmige Verlauf der Unterseite 5 begünstigt eine gleichmäßige Verteilung der durch die Leuchtfläche 6 ausgekoppelten Lichtintensität über den gesamten Umfang des ringförmigen Lichtleiterelements 2.

Um die Homogenität der Lichtintensität der Leuchtfläche weiter zu verbessern, ist die Ringbreite b der Leuchtfläche 6 nur halb so groß wie die Ringbreite s der Unterseite 5. Zur Herbeiführung dieser Durchmesserreduzierung ist am Lichtleiterelement 2 eine Schrägfläche 7 vorgesehen.

Das Lichtleiterelement 2 sitzt in einem ebenfalls ringförmigen Aufnahmeelement 8, das im Querschnitt hier beispielhaft u-förmig ist. Mit dem Aufnahmeelement 8 wird einerseits der wendelförmige Verlauf der Unterseite 5 ausgeglichen, so dass die Beleuchtungseinheit über den Umfang gesehen eine gleichmäßige Höhe h aufweist, um so insbesondere einfacher montiert werden zu können. Andererseits weist wengistens die äußere Ringwand 9 des Aufnahmeelements 8 an deren Innenseite eine hoch reflektierende Oberfläche auf. Durch diese Maßnahme wird erreicht, dass Licht, welches an der äußeren Ringoberfläche 10 des Lichtleiterelements 2 austritt, wieder in das Lichtleiterelement 2 zurückreflektiert wird. Damit lässt sich insgesamt die Leuchtstärke der Leuchtfläche 6 bei vorgegebener Lichtquellenstärke erhöhen. Dieser Effekt wird noch verstärkt, wenn auch die innere Ringwand 10 des Aufnahmelements auf der Innenseite sowie die kreisringsförmige Fußfläche 11 reflektierend ausgestaltet sind. Durch das erfindungsgemäße Lichtleiterelement 2 ist es somit möglich, mit nur einer Lichtquelle eine z. B. kreisringförmige Leuchtfläche 6 homogen auszuleuchten. Hierdurch reduzieren sich im Vergleich zu einer Anordnung mit mehreren Lichtquellen nicht nur die Herstellungskosten, sondern auch die Wartungskosten, da bei Bedarf nur eine Lichtquelle gewechselt werden muss.

## Patentansprüche

1. Beleuchtungseinheit, die ein Lichtleiterelement mit einer länglichen, gekrümmt verlaufenden Leuchtfläche und wenigstens eine Lichtquelle zur Ausleuchtung der Lichtleiterelements umfasst, dadurch gekennzeichnet, dass das Lichtleiterelement (2) eine Einkoppelstelle (3) für die wenigstens eine Lichtquelle aufweist, durch welche ein wesentlicher Teil des Lichts im Wesentlichen parallel zur Leuchtfläche (6) eingestrahlt wird, dass das Lichtleiterelement (2) so ausgebildet ist, dass das eingestrahlte Licht zumindest teilweise entlang der gekrümmten Leuchtfläche mittels Totalreflexion weiter reflektiert wird und dassReflexionsmittel vorgesehen sind, die einen festlegbaren Teil des ansonsten weiter reflektierten Lichts zur Leuchtfläche auskoppeln.

2. Beleuchtungseinheit nach Anspruch 1, dadurch gekennzeichnet, dass das Lichtleiterelement (2) und die Leuchtfläche (6) ringförmig, vorzugsweise kreisringförmig sind.

3. Beleuchtungseinheit nach Anspruch 1 oder 2, dadurch gekennzeichnet, dass die Leuchtfläche (6) eine das Licht diffus streuende Struktur aufweist.

4. Beleuchtungseinheit nach einem der vorhergehenden Ansprüche, dadurch gekennzeichnet, dass im Bereich der Leuchtfläche (6) und/oder einer der Leuchtfläche gegenüber liegenden Oberfläche (5) des Lichtleiterelements (2) Diffusionspartikel vorgesehen sind, die einen zum Material des Lichtleiterelements unterschiedlichen Brechungsindex aufweisen.

5. Beleuchtungseinheit nach einem der vorhergehenden Ansprüche, dadurch gekennzeichnet, dass die Leuchtfläche (6) oder eine der Leuchtfläche gegenüberliegende Oberfläche (5) von der Einkoppelstelle (3) der Lichtquelle (4) entweder wendelförmig abfällt oder wendelförmig ansteigt.

6. Beleuchtungseinheit nach einem der vorhergehenden Ansprüche, dadurch gekennzeichnet, dass wenigstens eine seitlich und/oder gegenüberliegend zur Leuchtfläche angeordnete Oberfläche Reflektoreigenschaften aufweist.
